Europäisches Patentamt

European Patent Office

Office européen des brevets

(11) Publication number: **0 400 579**
**A2**

## EUROPEAN PATENT APPLICATION

(21) Application number: 90110168.3

(22) Date of filing: 29.05.90

(51) Int. Cl.5: **G11B 23/087**

(30) Priority: 29.05.89 JP 135120/89

(43) Date of publication of application:
**05.12.90 Bulletin 90/49**

(84) Designated Contracting States:
**DE GB**

(71) Applicant: **Hitachi Maxell Ltd.**
**No 1-1-88, Ushitora Ibaraki-shi**
**Osaka-fu(JP)**

(72) Inventor: **Sumida, Takashi**
**30, Higashitakada, Oyamazaki-cho**
**Otokuni-gun, Kyoto-fu(JP)**

(74) Representative: **Selting, Günther, Dipl.-Ing. et**
**al**
**Patentanwälte von Kreisler, Selting, Werner**
**Deichmannhaus am Hauptbahnhof**
**D-5000 Köln 1(DE)**

(54) **A tape cartridge with a transparent window for watching a state of wound tape.**

(57) In a tape cartridge, a pair of rib members 5 are projected inward from the inner surface of an upper half 1a of a case body 1 as one body for regulating the right and left tape reel hubs 3, and there is provided a transparent window portion 4 of a laterally elongated shape with a narrow width w smaller than the minor diameter of each of the rib members 5, extending across the rib members 5. And there are provided right and left window connecting members 13 extending frontward from the right and left edges of the window portion 4 along on the inner surface of the case body 1 as one body and there are provided right and left prism members 14 for detecting an end of a tape, connected as one body with the front edges of the respective window connecting members 13, so that both of the right and left hubs 3 can be seen at the same time with reference to each other.

*Fig . 5*

EP 0 400 579 A2

# A TAPE CARTRIDGE WITH A TRANSPARENT WINDOW FOR WATCHING A STATE OF WOUND TAPE

## BACKGROUND OF THE INVENTION

### FIELD OF THE INVENTION

The present invention relates to a magnetic recording and/or reproducing tape cartridge, and more particularly to a tape cartridge having a specific transparent window portion provided in a case body of the tape cartridge for watching the inside of the case body through the window portion.

### DESCRIPTION OF THE PRIOR ART

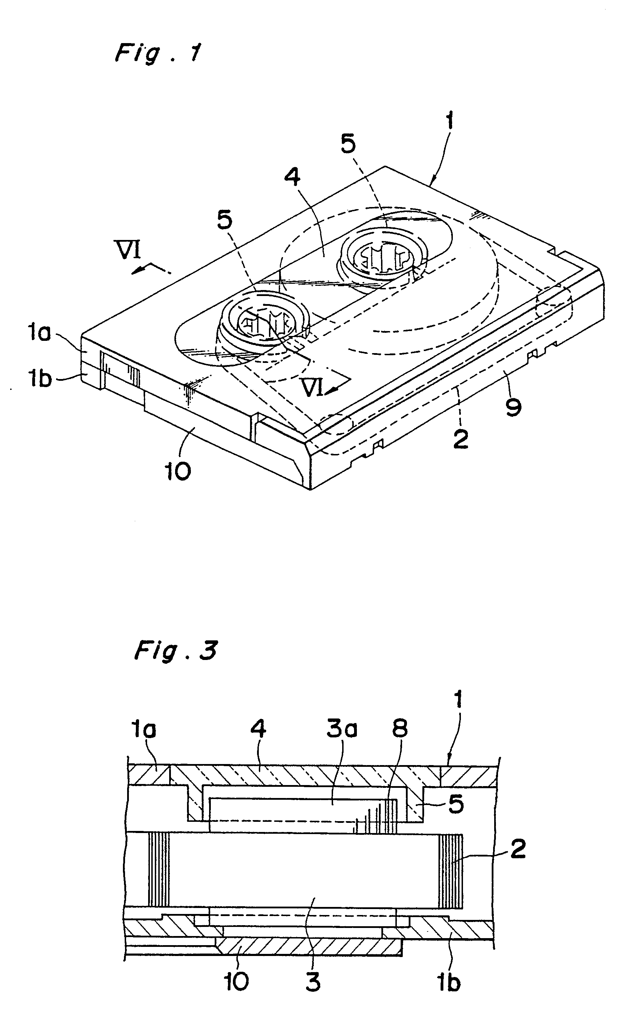

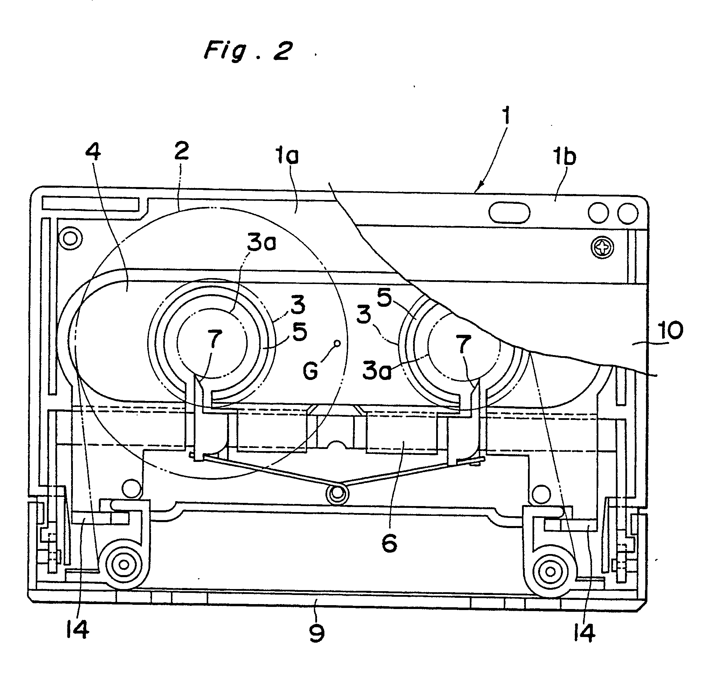

Figs. 1 to 3 show a conventional tape cartridge disclosed in the Japanese Utility Model Publication 1-45371, so called a DAT tape cartridge, having its case body 1 composed of upper and lower halves 1a and 1b made of plastic resin material abutted to be fixed with each other and having a pair of tape reel hubs 3 for winding a tape 2 therearound rotatably accommodated in the right and left portions respectively inside the case body 1.

There is provided a transparent window portion 4 elongated in the right and left direction in the upper half 1a covering the position of the right and left hubs 3. On the inner surface of the transparent window portion 4, there are projected a pair of ring shaped rib members 5 inwardly as one body with the window portion 4 for regulating the loose movement of the hubs 3 and each of the hubs 3 has a projected column portion 3a projected upward from the top of each of the hubs 3 and rotatably accommodated in the ring portion of each of the ribs 5. On the surrounding side surface of the projected column portion 3a of each of the hubs 3, there are formed uneven grooves 8 for detachably engaging with a claw member 7 which is fixed to a hub lock mechanism 6 for braking the rotation of the hub 3.

The hub lock mechanism 6 is interlocked with a front lid 9 which is pivotally mounted on the front side of the case body 1, and only when a slider plate 10 provided on the bottom of the case body 1 is opened and the front lid 9 is pivotally opened, the locking state between the claw member 7 fixed to the hub lock mechanism 6 and the grooves 8 formed on the side surface of the projected portion 3a of the hub 3 is released. And there are provided a pair of right and left prism members 14 as one body connected to the right and left front sides of the window portion 4 in order to detect the end of the tape 2.

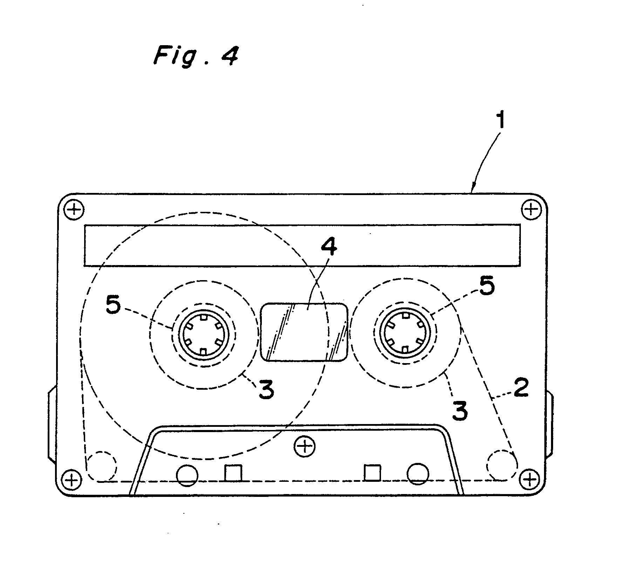

Fig. 4 shows another type of a tape cartridge, so called a standard Philip's type, having a pair of rib members 5 for regulating the position of the hubs 3 in the case body 1 and having a transparent window portion 4 provided between the right and left rib members 5 and 5.

In the case shown in the former conventional example of a DAT tape cartridge having a pair of ribs 5 projected downward from the transparent window 4 as one body, when the tape cartridge is dropped by accident, the rib 5 may come into collision with the projected portion 3a of the hub 3 and may be damaged. In particular, in the case the tape is in a state of full wound on one of the hubs 3, there may easily occur a damage of the rib 5 due to the collision with the hub 3. Some of the damages of the rib 5 makes it impossible to regulate the position of the hubs 3 and the broken piece thereof may cause such a serious trouble that the tape can not be fed in the case body 1.

Since the transparent window 4 is molded with AS or PS resin material having good transparency in order to improve the visibility of watching the inside of the case body 1, the shock resistance of the transparent window 4 is inferior to that of the case body 1 molded with opaque resin material such as ABS resin. That is the reason why such an accident of damaging the rib 5 occurs.

On that point, in the latter conventional tape cartridge as shown in Fig. 4, since the ribs 5 are provided on the upper half 1a of the case body 1 made of plastic resin material with good shock resistance, the damage accident of the rib 5 due to dropping the tape cartridge can be prevented as far as possible. However, since the transparent window 4 of small size is provided in a narrow space corresponding to a portion between the right and left ribs 5 and 5, there is a problem that it is difficult or impossible to watch the hubs 3 and it becomes difficult to watch the remaining state of the wound tape 2.

Moreover, in the case of the former conventional DAT tape cartridge having a ribs 5 projected inward from the inner surface of the transparent window 4, there is defined a gate G in the central portion between the right and left sides of the window 4, and when transparent resin material is charged in the window 4 through the gate G so that the right and left front portions of the window 4 are molded as one body with the prism members 14 for detecting the end of the tape 2, the flow of the transparent resin material is deteriorated and there may occur a bad charge of the resin material onto the respective prism members 14. Therefore, there has been a problem that the contraction of the prism member 14 becomes large and there occurs a strain, resulting in deteriorating the accuracy of the molding.

## SUMMARY OF THE INVENTION

An essential object of the present invention is to provide a tape cartridge solving the problem mentioned above and preventing the damage of the ribs for regulating the positions of the tape reel hubs, securing the visibility when watching the remainder of the tape.

Another object of the present invention is to improve the molding accuracy of the prism member to be molded as one body with the transparent window member.

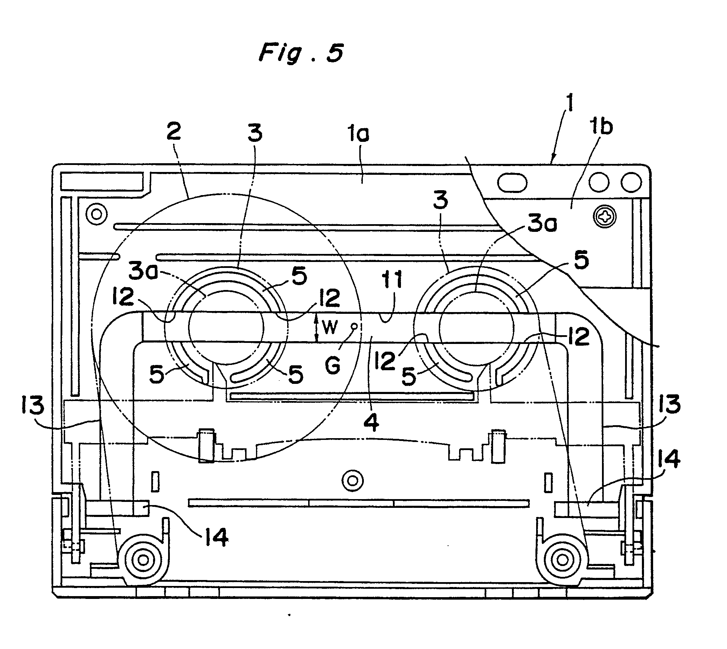

In order to attain the objects mentioned above, an aspect of the present invention is in that, as shown in Fig. 5 for example, in a tape cartridge having a pair of rib members 5 projected inward from the inner surface of an upper half 1a of a case body 1 as one body with the upper half for regulating the positions of a pair of right and left tape reel hubs 3, there is provided a transparent window portion 4 of a laterally elongated shape with a narrow width w smaller than the minor diameter of each of the rib members 5 intersecting the rib members 5.

Another aspect of the present invention is in that, there are provided right and left window connecting members 13 extending frontward from the right and left edges of the window portion 4 along on the inner surface of the case body 1 as one body and there are provided right and left prism members 14 for detecting an end of a tape connected as one body with the front edges of the respective window connecting members 13.

According to a feature of the present invention, since the rib members 5 for regulating the positions of the hubs 3 are not connected as one body with the transparent window portion 4, the rib members 5 can be molded as one body with the case body 1 made of opaque plastic resin material with good shock resistance and also the transparent window portion 4 can be molded with plastic resin material having good transparency.

According to another feature of the present invention, since the transparent window portion 4 is provided with an elongated shape extending across the right and left rib members 5, both of the right and left hubs 3 can be seen at the same time with reference to each other.

According to still another feature of the present invention, since the rib members 5 are not provided as one body with the transparent window portion 4, even in the case that the prism members 14 are molded as one body with the transparent window portion 4 through a single gate G formed in the middle portion in the right and left direction in the window portion 4, the flow of the resin materials flowing toward the respective prism members 14 become smooth and good.

The features of the present invention which are believed to be novel are set forth with particularity in the appended claims. The present invention together with further objects and advantages thereof may best be understood with reference to the following detailed description, taken in conjunction with the accompanying drawings.

## BRIEF DESCRIPTION OF THE DRAWINGS

Figs. 1 to 3 show a conventional tape cartridge, wherein

Fig. 1 is a schematic perspective view of an entire part of the conventional tape cartridge,

Fig. 2 is a plan view with a partial cut off portion, and

Fig. 3 is an enlarged sectional view cutting along the line VI-VI shown in Fig. 1.

Fig. 4 is a plan view showing another conventional tape cartridge.

Figs. 5 to 7 show an embodiment of a tape cartridge according to the present invention, wherein

Fig. 5 is a plan view with a partial cut off portion,

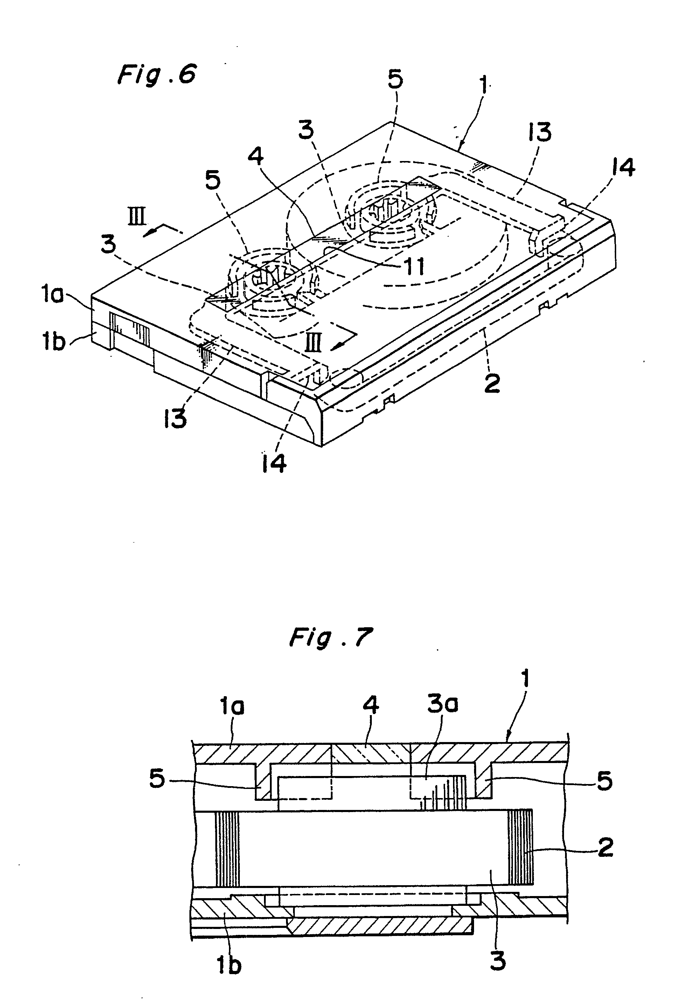

Fig. 6 is a schematic perspective view of an entire part, and

Fig. 7 is an enlarged sectional view cutting along the line III-III shown in Fig. 6.

## DETAILED DESCRIPTION OF THE PREFERRED EMBODIMENT

Before the description proceeds, it is noted that the present invention is explained with reference to an example of a DAT tape cartridge and also noted that since the basic structure of the tape cartridge is similar to those of the conventional ones explained with reference to Figs. 1 to 4, like parts are designated by the same reference numerals throughout the drawings.

A preferred embodiment of the present invention will be explained hereinafter with reference to Figs. 5 to 7.

On the inner surface of an upper half 1a of a case body 1, there are formed a pair of ring shaped rib members 5 by molding as one body with the upper half 1a each having a minor diameter larger than a major diameter of a projected portion 3a of each of a tape reel hubs 3 for regulating the positions of a pair of tape reel hubs 3 by engaging the projected portion 3a of each of the hubs 3 therein. Also there is formed a window aperture portion 11 of a lateral elongated shape having a width smaller than the minor diameter of the rib member 5, said window aperture portion 11 passing across the respective center portions or neighborhoods of the right and left rib members 5. By forming the window aperture 11, there are formed two pairs of cut off recesses 12 in the right and left rib members 5 opposing each other.

On the other hand, there is formed a transparent window member 4 by two color molding as one body having the same shape as that of the window aperture portion 1 defined in the upper half 1a. The transparent window member 4 has a narrow width w in the back and forth direction thereof smaller than the minor diameter of the rib member 5. And there are formed window connecting members 13 as one body with the window member 4 extending from the right and left edges of the window member 4 in a manner of training on the inner surface of the upper half 1a toward right and left tape taking out openings respectively. And there are also formed a pair of right and left prism members 14 for detecting a tape end portion as one body connected with the front edges of the right and left window connecting members 13 respectively.

In the process of the two color molding of the upper half 1a and the transparent window member 4, the upper half 1a of a predetermined shape having such as a window opening 11 defined therein and rib members 5 projected inwardly is primarily molded, thereafter the transparent window member 4 and the prism members 14 are secondarily molded as one body in the upper half 1a.

In the secondary molding process, the gate G is defined in the middle portion in the lateral direction of the transparent window member 4. As the primary molding material, there may be used such as an ABS resin with good shock resistance, and as the secondary molding material, there may be used such as an AS resin with good transparency.

In this embodiment of the present invention, since the transparent window member 4 is formed in such a manner that the window member 4 is elongated across the right and left rib members 5 so that the hubs 3 can be seen through the window portion at the same time, the remainder of the wound tape 2 can be easily watched. Moreover, since the rib members 5 for regulating the hubs 3 are not formed as one body with the transparent window member 4 but formed as one body with the case body 1, the damaging accident of the rib member 5 due to such as a shock of dropping the tape cartridge can be effectively prevented by molding the case body 1 with opaque resin materials having good shock resistance.

In addition, when the prism members 14 for detecting the tape end portion are respectively molded as one body with the right and left end portions of the transparent window member 4 through the window connecting members 13 respectively, the gate G is defined in the middle portion of the transparent window member 4 in the lateral direction thereof so that the molding materials are fed through the gate G, whereby the resin materials for molding the right and left prism members 14 flow smoothly and there is an advantage for molding the prism members 14 without an occurrence of a strain.

## Claims

1. A tape cartridge comprising:
a case body for accommodating a magnetic recording and/or reproducing tape, composed of upper and lower halves abutted to each other;
a pair of right and left ring shaped rib members projected inwardly from an inner surface of said upper half of the case body as one body with said case body for regulating the positions of a pair of right and left tape reel hubs,
a transparent window member of a laterally elongated shape having a narrow width smaller than the minor diameter of each of said rib members, said transparent window member being provided in said upper half of the case body, extending across the central portions of said right and left rib members, so that both of the right and left tape reel hubs can be seen at the same time with reference to each other, and said rib members being not provided on said transparent window member.

2. The tape cartridge according to claim 1, wherein a pair of right and left window connecting members are formed as one body with said transparent window member, said connecting members extending frontward along on the inner surface of said upper half of the case body from the right and left edges of said transparent window member toward a pair of right and left prism members respectively, said prism members being formed as one body with the front edges of said window connecting members respectively for detecting a tape end portion.

3. The tape cartridge according to claim 1, wherein said case body is made of opaque plastic resin material with good shock resistance and said transparent window member is made of plastic resin material with good transparency.

4. The tape cartridge according to claim 1, wherein said prism members are molded as one body with the transparent window member through a single gate G formed in the middle portion in the right and left direction in the window portion.

5. The tape cartridge according to claim 1, wherein each of said rib members has a minor diameter larger than a major diameter of a projected portion of each of said tape reel hubs for engaging the projected portion of each of the hubs therein.

6. The tape cartridge according to claim 1, wherein there are formed two pairs of cut off recesses in said right and left rib members opposing each other.

7. The tape cartridge according to claim 1, wherein there is used an ABS resin with good shock resistance as a primary molding material for forming said upper half and there is used an AS resin with good transparency as a secondary molding material for forming said transparent window member and prism members.

*Fig . 1*

*Fig . 3*

Fig . 2

*Fig. 4*

# Fig . 5

Fig.6

Fig.7